# EUROPEAN PATENT APPLICATION

(11) **EP 2 352 314 A1**
(43) Date of publication of application: **03.08.2011**
(21) Application number: 09823055.0
(22) Date of filing: 21.10.2009
(51) Int. Cl.: H04W 4/00

(54) **CONFIGURING METHOD OF MULTIPLE WORKSTATIONS IN SINGLE MACHINE COMPUTER SYSTEM, THE USB HUB**

(30) Priority: 31.10.2008 WO PCT/CN2008/072890
(71) Applicant: SHENGLE INFORMATION TECHNOLOGY (SHANGHAI) CO., LTD, Zhangjiang High-Tech Park Pudong New Area Shanghai 201203 (CN)
(72) Inventor: SHENGLE INFORMATION TECHNOLOGY (SHANGHAI) CO., LTD, Zhangjiang High-Tech Park Pudong New Area Shanghai 201203 (CN)
(74) Representative: Hall, Graeme Keith
(86) International application number: PCT/CN2009/074553
(87) International publication number: WO 2010/048863

(57) **Abstract**

The present invention discloses a configuration method of "single-host multi-workstation" computer system, a USB Hub, a "single-host multi-workstation" computer system and a workstation card, wherein the configuration method includes the following steps: (1) identify all the characteristic mark USB Hubs connected to the host; correlate each characteristic mark USB Hub with an extended workstation; correlate the primary workstation and each extended workstation with a graphic card. It shall be noted that the three sub-steps in step (1) are not limited by sequence. Step (1) is preferably as below: ① identify all the characteristic mark USB Hubs connected to the host; ② correlate each characteristic mark USB Hub with an extended workstation; ③ respectively correlate the primary workstation and each extended workstation with a graphic card.

## Description

### Technical Field

The present invention relates to a configuration method of "single-host multi-workstation" computer system, as well as a USB Hub, a "single-host multi-workstation" computer system and a workstation card.

### Background Art

Single-host multi-workstation technology for computer is a technology to install a small amount of hardware and the corresponding software (the software is a key part of the single-host multi-workstation technology, so is generally called a single-host multi-workstation software) in an ordinary computer to share one computer among multiple users at the same time, enabling the multiple users to share the hardware, software and peripheral resources of one computer individually at the same time, namely, one host serving multiple workstations.

Single-host multi-workstation technology allows one computer to serve as multiple ones, providing distinctive benefits. As to single-host multi-workstation software as mentioned above, there have been two products Betwin and Hisharc available in the market which are widely used in the field of electronic reading room and other fields.

If a computer is connected with several human-machine interaction devices, (a human-machine interaction device is defined as: including but not limited to a graphic card, a display terminal -- monitor, projector, television or the like, a sound card, a speaker, an earphone, a microphone, a mouse, a keyboard, a joy pad and other input output devices, the same below), when this computer is logged in and/or used by multiple user names, it is required to allocate these human-machine interaction devices to different workstations according to the users' desires (each workstation is composed of one or several human-machine interaction devices sharing one host's resources for one user's use, the same below). There have been several solutions for the allocation method and system, but these solutions still have some defects.

The first solution is a popular technical solution in nowadays, which includes the following three steps:
1. Connect all the human-machine interaction devices to a computer, switch on the computer and log into the computer, at this time, all the human-machine interaction devices belong to one login user.
2. Run the single-host multi-workstation software, enter the workstation configuration interface, display all the human-machine interaction devices to the computer user, and then the computer user allocate these human-machine interaction devices to different workstations.
3. Afterwards, when the computer is in a multi-workstation state, all the human-machine interaction devices are automatically allocated to different workstations according to the allocation in step 2 under the control of the single-host multi-workstation software. Different computer users may log into one workstation by using a corresponding user name and individually use this computer.

Defects of this solution are as follows: in step 2, namely the step of workstation configuration, the user is required to have professional computer knowledge, thus increasing the difficulty in configuration; moreover, the configuration method adopted by this solution is not intuitive and direct.

US patent specification (Patent No.: US7030836; date of issue: April 18, 2006) discloses the second technical solution, the title of which is called system and method for configuring a multi-user computer system. The Specification provides another method for configuring human-machine interaction devices for various users of a "single-host multi-workstation" computer. In this method, non-display human-machine interaction devices are firstly configured by software, and then the computer user participates in the configuration of human-machine interaction display devices by following prompts in an intuitive and manual way, thereby saving the work that the user manually configures the non-display human-machine interaction devices and making the configuration of the display devices more intuitive.

The technical solution of this specification adopts the concept of "collection"; all the peripheral devices belonging to one workstation are defined to be a collection in this patent.

This solution includes the following three steps:
1. Connect all the human-machine interaction devices to a computer, switch on the computer and log into the computer, at this time, all the human-machine interaction devices belong to one login user.
2. Run the single-host multi-workstation software, and the computer will automatically perform the configuration of the human-machine interaction devices (steps c and d require the manual participation of the user); the configuration process is as follows:
   a) Form a collection by using all the non-USB non-display human-machine interaction devices (this collection is temporarily not complete as display devices are temporarily not included);
   b) Form a plurality of collections by using all the USB non-display human-machine interaction devices according to a certain logic (display devices temporarily not included), wherein the logic is complicated; certain prerequisites are set; and it is needed to analyze the connection relations between all the USB devices and the USB Hubs; however, the technique of adding hardware feature identifications to USB Hubs is not involved.
   c) The collections as defined according to the above-mentioned logic, each collection having at least a keyboard or a mouse. The task of this step is to allocate the display devices to different collections one by one. Therefore, the system shows a prompt dialog box in a first display device, instructing the user to press any key of a keyboard or a mouse, wherein the keyboard or the mouse belongs to a workstation that the user wants the first display device to be included, and then the display device is added to the collection that the keyboard or the mouse belongs to according to the key pressed.
   d) Other display devices are also implemented as per step c one by one.
3. After the configuration process, various workstations enter into the operating state according to the configuration result. Different computer users log into any one of the workstations by using a respective user name and individually use this computer.

The defects of the above patent are as follows:
Firstly, according to the configuration method of this patent, it is required that each workstation has at least a keyboard (or other human-machine interaction input device of designated type). Such a requirement is not a reasonable precondition because the configuration cannot be completed if a workstation does not have a keyboard (or the human-machine interaction input device of designated type).

Secondly, according to the configuration method of this patent, those human-machine interaction devices plugged in different USB Hubs (sub-Hub and parent-Hub) may belong to different collections (corresponding to different workstations), or may be forced to belong to a same collection (corresponding to the same workstation). Common users are prone to take the latter as a mistake.

Thirdly, when the system enters into the multi-workstation operating state after the configuration, if those human-machine interaction devices after configuration are disconnected from the host, for example, being unplugged by the user or being in a poor contact with the host, else if the USB devices after configuration are unplugged from one USB port and plugged into another port of the same USB Hub, configuration errors may take place, leading to the operation of some human-machine interaction devices failing to conform to the configuration result; that is to say, the "one-host multi-user" computer and various human-machine interaction devices according to this solution may have unfavorable operating stability.

### Summary of the Invention

To overcome the above technical defects, the present invention provides a configuration method of "single-host multi-workstation" computer system, wherein this configuration method enables automatic implementation of most or all of the steps of the configuration process by a "single-host multi-workstation" software, and the system is relatively stable. Meanwhile, the present invention further provides a USB Hub as used in the configuration method, and a computer system containing this USB Hub, and a workstation card.

The detailed technical solution is as follows:
A configuration method of "single-host multi-workstation" computer system, wherein the system comprises a host, in which installs a plurality of graphic cards; the host connects to at least one characteristic mark USB Hub; the method performs single-host multi-workstation configuration by using the system, wherein the method includes the following steps: (1) identify all the characteristic mark USB Hubs connected to the host; correlate each of the characteristic mark USB Hubs with an extended workstation; respectively correlate a primary workstation and each extended workstation with a corresponding graphic card. It shall be noted that the three sub-steps in step (1) are not limited by sequence; In a preferred solution, step (1) is as below: □ identify all the characteristic mark USB Hubs connected to the host; □correlate each of the characteristic mark USB Hubs with an extended workstation; □respectively correlate a primary workstation and each extended workstation with a corresponding graphic card.
(2) Allocate human-machine interaction devices connected to a respective characteristic mark USB Hub to the corresponding extended workstation correlated with the respective characteristic mark USB Hub; allocate other human-machine interaction devices to the primary workstation.

It shall be noted that, the characteristic mark USB Hub refers to a USB Hub having identifiable characteristic mark and can pass an authentication. The USB Hub refers to a device with a built-in USB Hub, including a device with only a built-in USB Hub or a device integrated by a USB Hub and other apparatus and keys. The characteristic mark USB Hub refers to a device with a built-in characteristic mark USB Hub. The primary workstation refers to a workstation formed by using the human-machine interaction devices directly connected to the host to share the host resources. The extended workstation refers to a workstation formed by using the human-machine interaction devices connected to a certain characteristic mark USB Hub to share the host resources. It is known to all that before step (1), all the characteristic mark USB Hubs that may be used in future shall be switched on and connected to the host.

The characteristic mark USB Hubs are respectively connected to the host in a direct way, which means that serial connection between characteristic mark USB Hubs is not allowed.

A preferable way to "identify all the characteristic mark USB Hubs connected to the host" is as follows:
When the characteristic mark of the characteristic mark USB Hub is stored in a main chip of the USB Hub, or in an external ROM of the main chip of the USB Hub, the step "identify all the characteristic mark USB Hubs connected to the host" is detailed as follows: a) read the characteristic information of the USB Hub stored in the main chip or the external ROM of the main chip of various USB Hubs; b) authenticate the characteristic mark information of the USB Hubs as read one by one; if the characteristic mark information is a designated characteristic mark information (the values and meanings of characteristic marks have been negotiated with USB Hub hardware manufacturers in advance, and different manufacturers have different characteristic mark information of USB Hubs), the authentication is passed, then the USB Hub is regarded as a characteristic mark USB Hub.

When the characteristic mark of the characteristic mark USB Hub is stored in a USB device connected with the USB Hub, the step "identify all the characteristic mark USB Hubs connected to the host" is detailed as follows: a) read the characteristic information stored in the main chip or the external ROM of the main chip of various USB devices; b) authenticate the characteristic mark information of the USB devices as read one by one, if the characteristic mark information is a designated characteristic mark information (the values and meanings of characteristic marks have been negotiated with USB device hardware manufacturers in advance, and different manufacturers have different characteristic mark information of USB devices), the authentication is passed, then the USB Hub connected with the USB device is regarded as a characteristic mark USB Hub.

When the characteristic mark of the characteristic mark USB Hub adopts the index number of the host USB interface to which the USB Hub is connected, the step "identify all the characteristic mark USB Hubs connected to the host" is detailed as follows: the USB Hub connected to the host via one of the designated host USB interfaces is regarded as a characteristic mark USB Hub.

A dual-head graphic card supportable by windows XP or higher operating systems is similar to two graphic cards of the plurality of graphic cards in the present invention, which is also within the protection scope of the present invention.

The USB Hubs are respectively connected with a human-machine interaction device. In addition to a graphic card, the human-machine interaction device can be selected from one of a keyboard, a mouse, a joy stick, a sound card, a microphone and a camera or the combination.

It shall be noted that, when the system performs step (1), the USB Hub in the system is preferably not connected to any human-machine interaction device.

Between steps (2) and (1), the system is preferably restarted and then connected with human-machine interaction devices.

The step "correlate each of the characteristic mark USB Hubs with an extended workstation" is detailed as follows: set the number of extended workstations in the system to be the same as the number of the characteristic mark USB Hubs identified, and correlate each characteristic mark USB Hub with a corresponding extended workstation.

Preferably, the step "respectively correlate a primary workstation and each extended workstation with a corresponding graphic card" includes the following sub-steps: 4a) pop up a prompt window only on the display terminal device connected to a certain graphic card, instructing the user to input an action via a certain input device of the workstation paired with the display terminal; 4b) wait for a while and during this period, if an action from an input device is identified, and if the input device from which the input action comes is connected with a characteristic mark USB Hub, or the input action comes directly from a characteristic mark USB Hub, then the graphic card connected with the display terminal device is correlated with the extended workstation corresponding to the characteristic mark USB Hub; if the input device from which the input action comes is directly connected with the host, the graphic card connected with the display terminal device is correlated with the primary workstation; 4c) repeat steps 4a) and 4b) until the prompt window as described in step 4a) has been popped up for all the graphic cards.

Preferably, the step "respectively correlate a primary workstation and each extended workstation with a corresponding graphic card" includes the following sub-steps:
Lead video output of the host graphic cards to the characteristic mark USB Hubs, and dispose a signal detection apparatus on the periphery of the characteristic mark USB Hub, wherein the signal detection apparatus is used to identify whether a specific signal is output from a graphic card;
5a) output the specific video signal as described in step 5a) via only one graphic card;
5b) wait for a while; during this period, if a characteristic mark USB Hub display box identifies the video input signal, the graphic card is assigned to the extended workstation corresponding to the characteristic mark USB Hub display box;
5c) repeat steps 5b) and 5c) until all the graphic cards have output the specific video signal as described in step 5a);
5d) assign the graphic cards that have not yet been assigned to the primary workstation.

In step 5b), it is also feasible to "output an ordinary video signal via only one graphic card" or "make only one graphic card not output video signal", to make sure that the output of a certain graphic card is different from the output of other graphic cards in the host, and the signal detection apparatus in step 5a) can identify the output of this graphic card and timely feedback to the host via the characteristic mark USB Hub.

In the present invention, the user is allowed to configure multiple graphic cards to one workstation. After configuration, it may happen that certain workstation has not been allocated any graphic card. At this time, the computer may adjust the configuration of the human-machine interaction devices of this workstation (all the devices in the workstation are temporarily disabled, or configured to another workstation), or may keep the individuality of this workstation (the workstation may have no output temporarily, or adopts non-display output mode such as audio output).

Preferably, when the "single-host multi-workstation" is composed of one host and two workstations, and each workstation is configured with one graphic card, the present invention can adopt a dual-graphic card switching method for rapid configuration. This method includes the following steps: press a certain key or a certain combination of keys to realize the exchanging of the graphic cards of the two workstations. This means, when the configuration relation between the graphic cards and the workstations fails to meet the desire of the user, there is a shortcut key for switching, which can be set via the keyboard or can be directly set onto the USB Hub for the convenience of switching by the user. In any phase after the confirmation of the configuration relation between the graphic cards and the workstations, this shortcut key can be used to switch the graphic card configurations. It shall be noted that the dual-graphic card switching method of the "single-host multi-workstation" computer system in the present invention can not only apply to the "single-host multi-workstation" computer system of this invention, but also can apply to various "single-host multi-workstation" computer systems of other kinds.

Before step (1) of the configuration method, step (0) as below is further included: make all the graphic cards connected to the host display the same user interface.

As to the equipment configuration method of "single-host multi-workstation" computer system, when the system has a plurality of characteristic mark USB Hubs, the characteristic marks of the plurality of characteristic mark USB Hubs are different from one another.

As to the equipment configuration method of "single-host multi-workstation" computer system, the characteristic mark USB Hubs have characteristic marks identifiable by the system and the characteristic marks could be retrieved by using the following method:
read an original default characteristic mark stored in the USB Hub chip for identification; or
read the characteristic mark stored in an external ROM of the USB Hub main chip for identification; or
read the characteristic mark stored in a USB device connected with the USB Hub for identification; or
read the index number of the host USB port to which the USB Hub is connected or other characteristic marks for identification.

As to the equipment configuration method of "single-host multi-workstation" computer system, the "original default characteristic mark" is one of the USB Hub's VID, PID or product serial number. The "characteristic mark stored in a USB device connected with the USB Hub" is one of the USB device's VID, PID or product serial number.

A USB Hub as used in the above equipment configuration method of "single-host multi-workstation" computer system comprises a USB Hub main chip and a peripheral circuit, wherein the USB Hub has a characteristic mark identifiable by a computer stored in the USB Hub main chip or in an external ROM of the USB Hub main chip or in a USB device connected with the USB Hub.

Furthermore, the USB Hub is integrated with a human-machine interaction device selected from one of a USB infrared receiver, a USB wireless receiver and a USB sound card or the combination.

Preferably, the USB Hub is integrated with a key capable of activating an input event. When the key is enabled, the USB Hub activates the host to generate an input event.

The USB Hub is integrated with a video input interface and an apparatus used to identify a specific video signal.

A "single-host multi-workstation" computer system, wherein the system comprises a host, in which installs a plurality of graphic cards; the host connects with the above-mentioned USB Hub; the USB Hub includes a USB Hub main chip and a peripheral circuit; the USB Hub has a characteristic mark identifiable by a computer stored in the USB Hub main chip, or in an external ROM of the USB Hub main chip, or in a USB device connected with the USB Hub.

Furthermore, the USB Hub is integrated with a human-machine interaction device selected from one of a USB infrared receiver, a USB wireless receiver and a USB sound card or the combination, wherein the human-machine interaction device has both input and output functions.

The USB Hub is integrated with a key capable of activating an input event. When the key is enabled, the USB Hub activates the host to generate an input event.

The USB Hub is integrated with a video input interface and an apparatus used to identify a specific video signal.

In the computer system, the USB Hub is connected with human-machine interaction devices respectively. The human-machine interaction device is selected from one of keyboard, mouse, remote control receiver, joy stick, sound card, speaker, microphone and camera or the combination.

The configuration method of "single-host multi-workstation" computer system according to the present invention, upon simplification, can be applied to a computer system adopting ordinary USB Hubs, wherein the system comprises a host, in which installs a plurality of graphic cards; the host is connected with at least one USB Hub. This method performs single-host multi-workstation configuration by means of the system without the need of USB Hub authentication; the method includes the following steps: (i) identify all the USB Hubs connected to the host; correlate each of the USB Hubs with an extended workstation; respectively correlate a primary workstation and each extended workstation with a corresponding graphic card. It shall be noted that the three sub-steps in step (i) are not limited by sequence; step (i) is preferably as below: □ identify all the USB Hubs connected to the host; □correlate each of the USB Hubs with an extended workstation; □respectively correlate a primary workstation and each extended workstation with a corresponding graphic card. (ii) Allocate the human-machine interaction devices connected to a respective USB Hub to the extended workstation corresponding to the respective USB Hub; allocate other human-machine interaction devices to the primary workstation.

A workstation card, integrated with at least one graphic card and at least one USB port or PS/2 port, the graphic card and the USB port are corresponded to each other in hardware design; in the "single-host multi-workstation" computer system, graphic cards of the same workstation card and the human-machine interaction devices connected to this workstation card are correlated with the same workstation.

The configuration method of "single-host multi-workstation" computer system in the present invention can be further simplified by the method below: adopt the above-mentioned workstation card, and insert it in a slot of a mainboard inside the host, the workstation card has a video output interface and a USB interface (and/or a PS/2 interface). The workstation card can be formed by integrating human-machine interaction connecting devices (such as a USB Hub) or other human-machine interaction devices on a graphic card.

All the human-machine interaction devices connected to the same workstation card and the graphic cards integrated in this workstation card are automatically configured to the same extended workstation; other human-machine interaction devices and graphic cards are automatically configured to the primary workstation.

The present invention further provides a configuration method of "single-host multi-workstation" computer system, wherein the method includes the following steps: (1) identify all the characteristic mark USB Hubs connected to the host; correlate each of the characteristic mark USB Hubs with an extended workstation; respectively correlate a primary workstation and each extended workstation with a graphic card. It shall be noted that the three sub-steps in step (1) are not limited by sequence; step (1) is preferably as below: □identity all the characteristic mark USB Hubs connected to the host; □correlate each of the characteristic mark USB Hubs with an extended workstation; □respectively correlate a primary workstation and each extended workstation with a graphic card. (2) Allocate the human-machine interaction devices connected to a respective characteristic mark USB Hub to the extended workstation corresponding to the respective characteristic mark USB Hub; allocate other human-machine interaction devices to the primary workstation.

The present invention further provides a computer system used in the above equipment configuration method, wherein the computer system further includes a USB graphic card which is connected with the characteristic mark USB Hub.

The present invention further provides an equipment configuration module for "single-host multi-workstation" computer system, wherein the system comprises a host, in which installs a plurality of graphic cards; the host is connected with at least one characteristic mark USB Hub, wherein the equipment configuration module includes: an identification unit, used to identify all the characteristic mark USB Hubs connected to the host; a first control unit, used to correlate each of the characteristic mark USB Hubs with an extended workstation; a second control unit, used to respectively correlate a primary workstation and each extended workstation with a graphic card; a first allocation unit, used to allocate the human-machine interaction devices connected to a respective characteristic mark USB Hub to the extended workstation corresponding to the respective characteristic mark USB Hub; and a second allocation unit, used to allocate other human-machine interaction devices to the primary workstation.

The human-machine interaction device is selected from one of keyboard, mouse, remote control receiver, joy stick, sound card, speaker, microphone and camera or the combination.

The first control unit includes: a quantity setting unit, used to set the number of extended workstations in the system to be the same as the number of the characteristic mark USB Hubs identified so as to correlate the extended workstations and the characteristic mark USB Hubs one to one.

The second control unit includes: an action prompt unit, used to pop up a prompt window only on the display terminal device connected with a certain graphic card, instructing the user to input an action via a certain input device of the workstation corresponding to the display terminal; an assignment control unit, used to wait for a while and during this period, if an action from an input device is identified, assign the graphic card connected with the display terminal device to the workstation corresponding to the input device from which the input action comes; a window control unit, used to repeat the operating steps of the action prompt unit and the assignment control unit, until the prompt window as shown in the operating step of the action prompt unit has been popped up for all the graphic cards.

The second control unit includes: a first output control unit, used to lead the video output of the graphic cards of the host to the characteristic mark USB Hubs, and dispose a signal detection apparatus on the periphery of the characteristic mark USB Hub, wherein the signal detection apparatus is used to identify whether a specific signal is output from a graphic card; a second output control unit, used to make only one graphic card output the specific video signal as described in the operating step of the first output control unit; a first assignment control unit, used to wait for a while and during this period, if a characteristic mark USB Hub display box identifies the video input signal, the graphic card is assigned to the extended workstation corresponding to the characteristic mark USB Hub display box; a signal control unit, used to repeat the operating steps of the second output control unit and the assignment control unit, until all the graphic cards have output the specific video signal as described in step 5a); a second assignment control unit, used to assign the graphic cards that have not yet been assigned to the primary workstation.

The equipment configuration module further includes: an initializing unit, used to make all graphic cards connected to the host display the same user interface.

Furthermore, when the system has a plurality of characteristic mark USB Hubs, the characteristic marks of the plurality of characteristic mark USB Hubs are different from one another.

The characteristic mark USB Hub has a characteristic mark identifiable by the system and the mark could be retrieved by the following units: a first acquisition unit, used to read an original default characteristic mark stored in the USB Hub for identification; or a second acquisition unit, used to read the characteristic mark stored in an external ROM of a main chip of the USB Hub for identification; or a third acquisition unit, used to read the characteristic mark stored in a USB device connected with the USB Hub for identification; or a fourth acquisition unit, used to read an index number of the host USB port to which the USB Hub is connected for identification.

The "original default characteristic mark" read by the first acquisition unit is one of the USB Hub's VID, PID or product serial number. The "characteristic mark stored in a USB device connected with the USB Hub" is one of the USB device's VID, PID or product serial number.

The present invention further provides an equipment configuration module for "single-host multi-workstation" computer system, wherein the equipment configuration module includes: an identification unit, used to identify all the characteristic mark USB Hubs connected to the host; a first control unit, used to correlate each of the characteristic mark USB Hubs with an extended workstation; a second control unit, used to respectively correlate a primary workstation and each extended workstation with a graphic card; a first allocation unit, used to allocate the human-machine interaction devices connected to a respective characteristic mark USB Hub to the extended workstation corresponding to the respective characteristic mark USB Hub; and a second allocation unit, used to allocate other human-machine interaction devices to the primary workstation.

The present invention further provides a computer system used by the above-mentioned equipment configuration module, wherein the computer system further includes a USB graphic card; the USB graphic card is connected with the characteristic mark USB Hub.

The beneficial effects of the present invention are as below:
Firstly, compared with the US patent in the prior art, by adopting the configuration method of the present invention in a computer, the configuration of all non-display human-machine interaction devices can be automatically completed without such a compulsory precondition that each workstation has at least one keyboard.
Secondly, compared with the US patent in the prior art, since the configuration of the workstation has no relation with the USB device itself but the USB Hub, in a multi-workstation working state, the user can perform hot plug and play to any USB device (the hot plug and play action of the user may just increase or reduce a device in the corresponding workstation, rather than exert other influences). The user may also connect a USB device without configuration to an ordinary USB Hub, and then the device is automatically allocated to the workstation corresponding to the USB Hub and runs normally in this workstation; meanwhile, in a multi-workstation working state, hot plug and play to an ordinary USB Hub itself is also allowed (the hot plug and play action of the user may just increase or reduce a device in the corresponding workstation, rather than exert other influences, this workstation still exists).

Thirdly, when the computer is in a single-user working state, if multiple graphic cards are installed in the computer, the operating system generally enables only one card among them; however the graphic card enabled by the operating system may not be the one expected by the user. Therefore, the present invention puts forward a configuration state that all graphic cards are enabled. In this configuration state, all graphic cards run normally, and all graphic cards output the same video signal to make sure that the user can use any display terminal device connected with the computer.

Fourthly, the present invention further provides multiple USB Hubs and workstation cards. The configuration method of "single-host multi-workstation" computer system is greatly simplified by using the hardware features of the USB Hubs and workstation cards as well as the hardware features of the graphic cards, USB Hubs and other human-machine interaction devices during the configuration process.

Fifthly, when the system only has two workstations, it is allowed to exchange the graphic cards of the two workstations by using a shortcut key.

Sixthly, workstations can be allocated by taking ordinary USB Hubs as identification or by using the identification of the USB port on the USB root Hub.

### Brief Description of the Drawings

FIG. 1 is a schematic view showing the connection of human-machine interaction devices of the "single-host multi-workstation" computer according to the present invention.
FIG. 2 is a schematic view showing the division of modules of the "single-host multi-workstation" software according to Embodiment 1 of the present invention.
FIG. 3 is a structural view of a basic configuration parameter table of various workstations of the "single-host multi-workstation" software according to Embodiment 1 of the present invention.
FIG. 4 is a logic view of the configuration method of "single-host multi-workstation" system adopted by the "single-host multi-workstation" software according to Embodiment 1 of the present invention.
FIG. 5 is a flow chart of the graphic card configuration method of the "single-host multi-workstation" software according to Embodiment 1 of the present invention.
FIG. 6 is a dynamic configuration flow chart of the human-machine interaction devices of various workstations of the "single-host multi-workstation" software according to Embodiment 1 of the present invention.
FIG. 7 is a structural view of the parameters in the "table of human-machine interaction devices of various workstations" of the "single-host multi-workstation" software according to Embodiment 1 of the present invention.
FIG. 8 is a schematic view of the multi-workstation configuration result of the "single-host multi-workstation" software according to Embodiment 1 of the present invention.
FIG. 9 is a schematic view of the principles for the "characteristic mark USB Hub display box" according to Embodiment 2 of the present invention.
FIG. 10 is a schematic view showing the division of modules of the "single-host multi-workstation" software according to Embodiment 4 of the present invention.
FIG. 11 is a flow chart of the graphic card shortcut switching method according to Embodiment 4 of the present invention.
FIG. 12 is a schematic view showing the division of modules of the "single-host multi-workstation" software according to Embodiment 5 of the present invention.
FIG. 13 is a schematic view of the extended workstation card according to Embodiment 6 of the present invention.
FIG. 14 is a schematic view of the multi-workstation configuration of the "single-host multi-workstation" software according, to Embodiment 6 of the present invention.
FIG. 15 is a schematic view showing the division of modules of the "single-host multi-workstation" software according to Embodiment 6 of the present invention.
FIG. 16 is a structural view of the equipment configuration module of "single-host multi-workstation" computer system according to Embodiment 7 of the present invention.
FIG. 17 is a structural view of the equipment configuration module of "single-host multi-workstation" computer system according to Embodiment 8 of the present invention.
FIG. 18 is a structural view of the first control unit in the equipment configuration module of "single-host multi-workstation" computer system according to Embodiment 8 of the present invention.
FIG. 19 is a structural view of the second control unit in the equipment configuration module of "single-host multi-workstation" computer system according to Embodiment 8 of the present invention.
FIG. 20 is a structural view of the second control unit in the equipment configuration module of "single-host multi-workstation" computer system according to Embodiment 9 of the present invention.

### Detailed Description of Preferred Embodiments

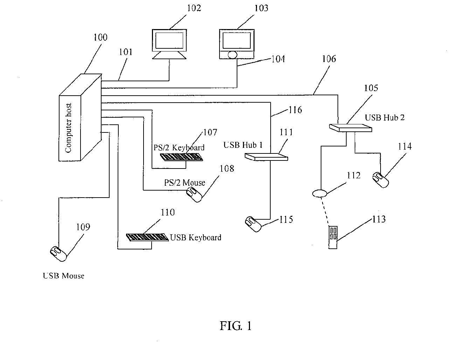

The present invention is further detailed in combination with the drawings and the embodiments. In embodiment 1, a computer system as shown in FIG. 1 comprises a computer host 100, in the computer host 100 installs two graphic cards (not shown in the figure), wherein one graphic card is connected to a monitor 102 via a video output line 101, another graphic card is connected to a television 103 via a video output line 104.

A USB Hub 105 is connected to the computer host 100 via a USB cable 106, and another USB Hub 111 is connected to the computer host 100 via another USB cable 116; wherein the USB Hub 105 is connected with a USB mouse 114 and a USB remote controller, the figure shows a receiving terminal 112 of the remote controller and a remote control emitter 113; the USB Hub 111 is connected with a USB mouse 115.

Wherein, the VID information stored in the main chip of the USB Hub 105 is "JYD"; the VID information stored in the main chip of the USB Hub 111 is not "JYD".

Moreover, the computer host 100 is further directly connected to a PS/2 keyboard 107, a PS/2 mouse 108, a USB mouse 109 and a USB keyboard 110.

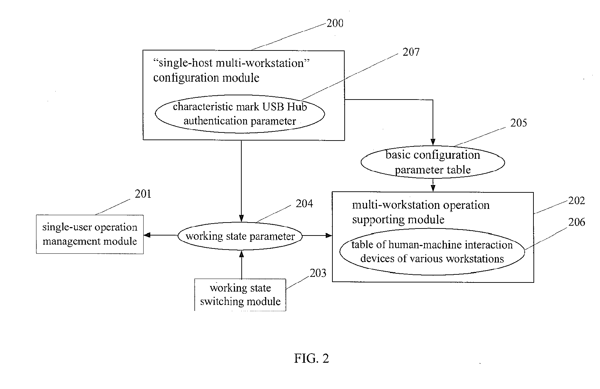

To configure the computer system in FIG. 1 to a "single-host multi-workstation" system, in this solution, a set of "single-host multi-workstation" software is installed in the computer, wherein the software includes 4 modules and 2 common parameters, as shown in FIG. 2, the 4 modules are: "single-host multi-workstation" configuration module 200, single-user operation management module 201, multi-workstation operation supporting module 202 and working state switching module 203 respectively. The two common parameters are: working state parameter 204 and basic configuration parameter table 205.

Wherein, the "single-host multi-workstation" configuration module 200 includes a "characteristic mark USB Hub authentication parameter" 207 used to determine whether the USB Hub connected to the computer host is a characteristic mark USB Hub. In this solution, the value of the "characteristic mark USB Hub authentication parameter" is "JYD".

Wherein, the working state parameter 204 is used to express working states, and is generally stored in the hard disk of the host, taking 0 or 1 as its value, respectively indicating a single-user state or a multi-workstation state.

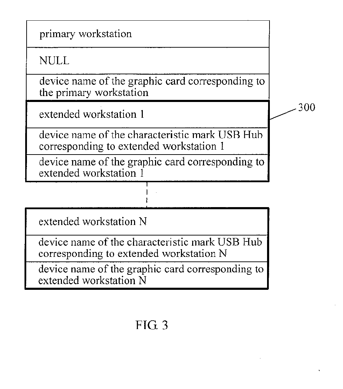

Wherein, the basic configuration parameter table 205, generally stored in the hard disk of the host, is used to indicate the workstation configuration information, including the information of the graphic cards corresponding to each workstation and the information of the characteristic mark USB Hub corresponding to each extended workstation. In this solution, the basic configuration parameter table adopts the form of a chained list, as shown in FIG. 3. The head of the chained list indicates a primary workstation, and each additional extended workstation is indicated by an additional node of the list, wherein node 300 indicates the configuration information of extended workstation 1.

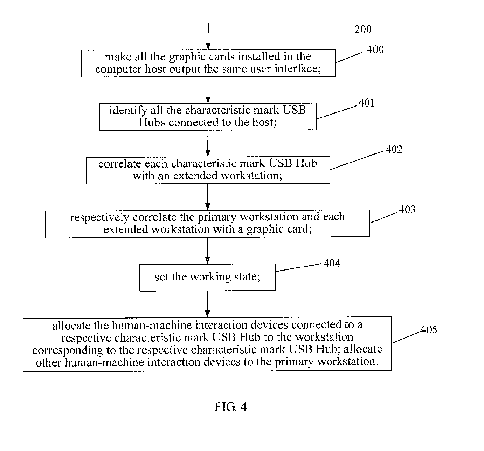

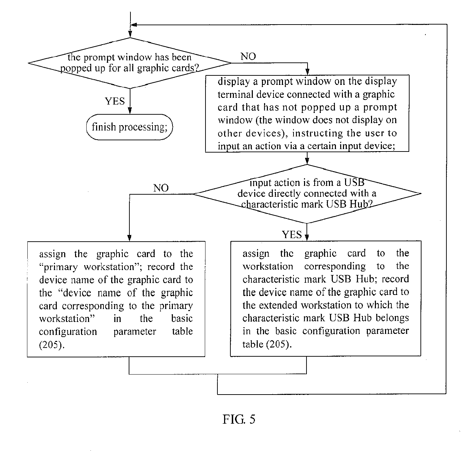

Please refer to FIG. 2, FIG. 3 and FIG. 4, after the installation of the "single-host multi-workstation" software, run the "single-host multi-workstation" configuration module 200 of it, then the software will perform the following configuration method with the steps as below:
1. Make all the graphic cards installed in the computer host output the same user interface (step 400). The result of this step is that both the current monitor 102 and the television 103 will display the same user interface.
2. Identify all the characteristic mark USB Hubs connected to the host (step 401), in detail: read the VID information of all the USB Hubs connected to the computer host; if the VID information of a USB Hub is the same as the value of the "characteristic mark USB Hub authentication parameter" 207, this USB Hub is a characteristic mark USB Hub, otherwise this USB Hub is a non-characteristic mark USB Hub; the result of this step is that USB Hub 105 is identified as a characteristic mark USB Hub, while USB Hub 111 is identified as a non-characteristic mark USB Hub.
3. Correlate each of the characteristic mark USB Hubs with an extended workstation (step 402), in detail: for each characteristic mark USB Hub, add an extended workstation in the basic configuration parameter table 205, and record the device name of the characteristic mark USB Hub in the extended workstation; the result of this step is that extended workstation 1 (300 in FIG. 3) is added into the basic configuration parameter table 205 and the device name of the characteristic mark USB Hub 105 is recorded to the extended workstation 1.
4. Respectively correlate the primary workstation and each extended workstation with a graphic card (step 403); the detailed logic is as shown in FIG. 5; the result of this step is as below:
   a) pop up a prompt window in the monitor 102, instructing the user to input an action via a certain input device paired with the monitor 102, at this time, if the user presses any key of the PS/2 mouse, the prompt window in the monitor 102 will disappear;
   b) pop up a prompt window in the television, instructing the user to input an action via a certain input device paired with the television 103, at this time, if the user presses any key of the USB mouse 114, the prompt window in the television 103 will disappear;
   c) record the device name of the graphic card connected with the monitor 102 into the "device name of the graphic card corresponding to the primary workstation" of the basic configuration parameter table 205; record the device name of the graphic card connected with the television 103 into the "device name of the graphic card corresponding to the extended workstation 1" of the basic configuration parameter table 205.
5. set the working state (step 404), in detail: set the working state parameter 204 to 1, which indicates a multi-workstation state.

So far, the operation of the "single-host multi-workstation" configuration module has finished. The configuration result is recorded in the basic configuration parameter table 205. When starting and performing the multi-workstation operation supporting module 202, the system performs step 405: allocate the human-machine interaction devices connected to a respective characteristic mark USB Hub to the extended workstation corresponding to the respective characteristic mark USB Hub; and allocate other human-machine interaction devices to the primary workstation.

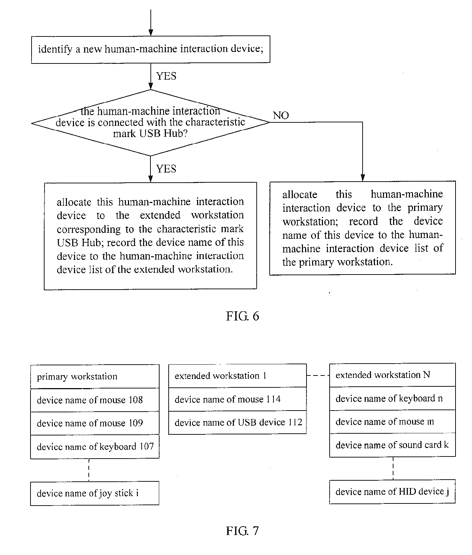

The detailed implementation logic of step 405 is as shown in FIG. 6. A parameter "table of human-machine interaction devices of various workstations" 206 is dynamically generated and maintained; in the parameter records the list of human-machine interaction devices of the primary workstation and each extended workstation currently in an active state. An extended workstation in an active state refers to an extended workstation whose corresponding characteristic mark USB Hub can be identified by the system.

The structure of the parameter "table of human-machine interaction devices of various workstations" 206 is as shown in FIG. 7. When the mouse 114 is disconnected with the computer host, the item "device name of the mouse 114" in this parameter is deleted. The treatment of other devices is the same.

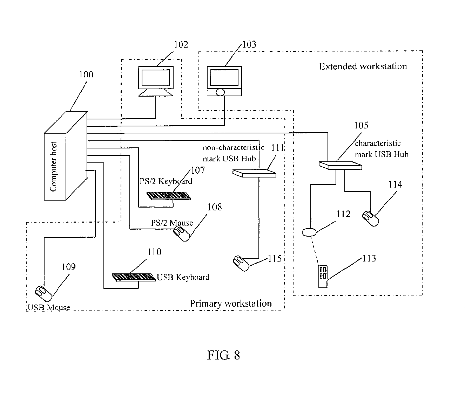

After performing the multi-workstation operation supporting module 202, make the computer enter into a multi-workstation operating state according to the basic configuration parameter table 205 and the parameter "table of human-machine interaction devices of various workstations" 206. In the multi-workstation operating state, the computer system in this embodiment, as shown in FIG. 8, is divided into a primary workstation and an extended workstation. These two workstations operate individually and independently, and can be used by two users individually and independently.

As shown in FIG. 2, the "single-host multi-workstation" software in Embodiment 1 includes a single-user operation management module 201 and a working state switching module 203;

Wherein, the working state switching module 203 allows the user to change the value of the working state parameter 204 by means of shortcut operation, so as to change the current working state; when the value of the working state parameter 204 is 0, enable the single-user operation management module 201 and disable the multi-workstation operation supporting module 202. When the single-user operation management module 201 is enabled, the computer will not be divided into different workstations. When the value of the working state parameter 204 is 1, enable the multi-workstation operation supporting module 202 and disable the single-user operation management module 201.

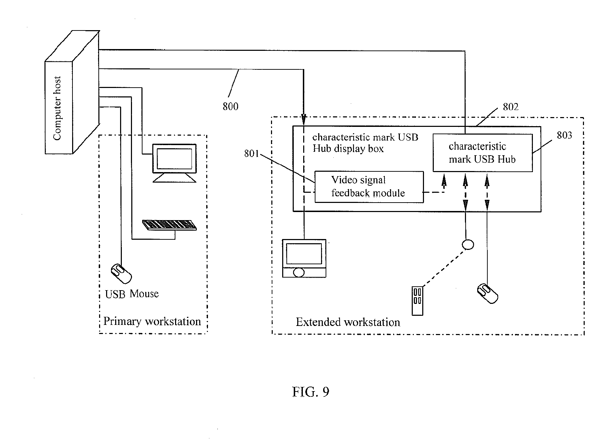

In another preferred embodiment 2, as shown in FIG. 9, a characteristic mark USB Hub display box 802 is connected to the host, wherein the characteristic mark USB Hub display box 802 is integrated with a characteristic mark USB Hub 803, meanwhile, a specific video signal output by the graphic card is transferred to the display terminal device through the box (wherein 800 is a video signal line). In addition, there is a video signal feedback module 801 in the box; when the specific video signal passes, the video signal feedback module 801 will capture this event and feedback this event to the computer host via the characteristic mark USB Hub 803.

With this solution, step 4 in the former embodiment "respectively correlate the primary workstation and each extended workstation with a graphic card" can be changed as below (not shown in the figure):
a) Make only one graphic card output a specific video signal;
b) Wait for a while and during this period, the single-host multi-workstation configuration module 200 of the "single-host multi-workstation" software running in the host keeps detecting whether a characteristic mark USB Hub display box 802 feedbacks to the host the event that "this USB Hub display box has received the specific video signal from the graphic card".

During this waiting period, if the single-host multi-workstation configuration module 200 detects that a certain characteristic mark USB Hub display box 802 has sent the feedback event to the computer, then:
Find the device name of the characteristic mark USB Hub from the basic configuration parameter table 205, so as to find the extended workstation in which the device name is; record the device name of the graphic card in step a) to the extended workstation.
   c) Repeat steps a) and b) until the specific video signal has been output by all the graphic cards;
   d) Assign the graphic cards that have not yet been assigned to the primary workstation, record the corresponding device names to the "device names of the graphic cards corresponding to the primary workstation".

Step a) can also be "make only one graphic card output an ordinary video signal" or "make only one graphic card not output any video signal" to make sure that the output of a certain graphic card in step a) is different from the output of other graphic cards in the host, and the single-host multi-workstation configuration module 200 can capture the timely feedback from the characteristic mark USB Hub display box about the output of the graphic card in step b).

Another Embodiment 3 is further provided to simplify the above embodiments by revising the steps "identify all the characteristic mark USB Hubs connected to the host" and "correlate each of the characteristic mark USB Hubs with an extended workstation" in these embodiments to "identify all the USB Hubs connected to the host" and "correlate each of the USB Hubs with an extended workstation" respectively, in detail: without USB Hub authentication, add one extended workstation into the basic configuration parameter table 205 for each USB Hub connected to the host, and record the device name of the USB Hub to the corresponding extended workstation.

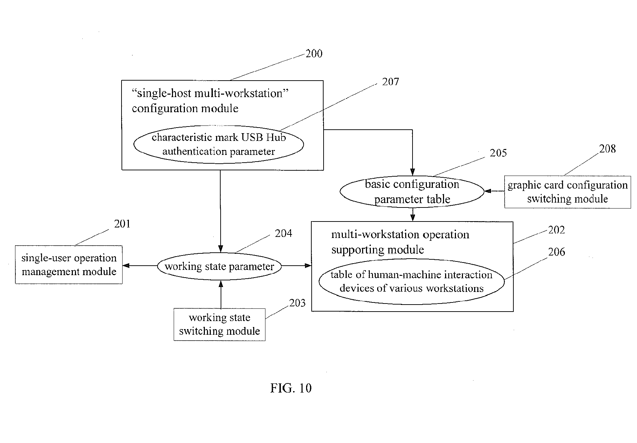

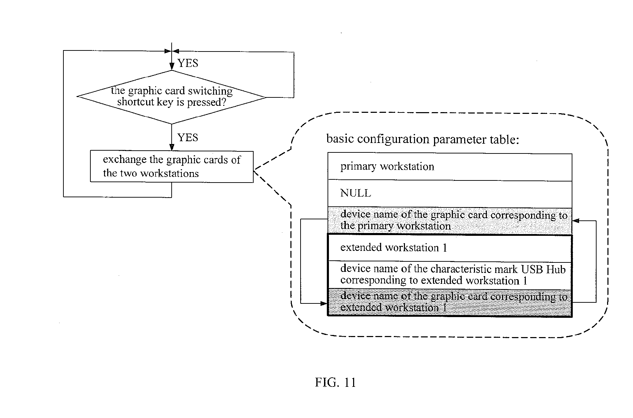

When the computer system is a "single-host dual-workstation" system, including a primary workstation and an extended workstation, the present invention further discloses another preferred Embodiment 4, wherein the "single-host multi-workstation" software is provided with an additional graphic card configuration switching module 208 compared with Embodiment 1. As shown in FIG. 10, this module defines a group of 65801930-1-Imacdonald 22 graphic card switching shortcut keys. According to the software logic as shown in FIG. 11, when the graphic card switching shortcut keys are pressed, the device names of the graphic cards corresponding to the two workstations in the basic configuration parameter table 205 are exchanged, and the multi-workstation operation supporting module 202 will run as per the new basic configuration parameter table 205.

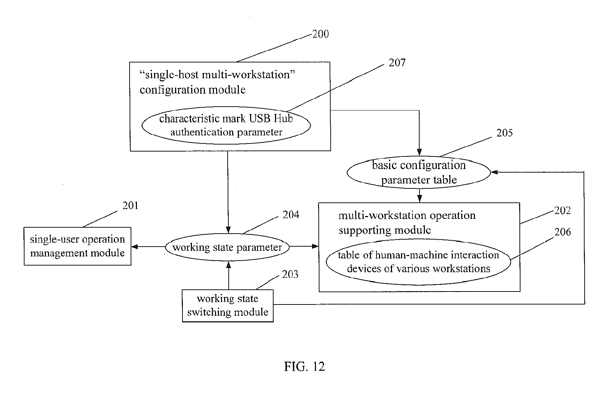

The present invention further discloses Embodiment 5, as shown in FIG. 12. In this embodiment, the working state switching module 203 not only allows the user to change the working state parameter 204 by means of shortcut operation, but also allows the user to change the values of various parameters in the basic configuration parameter table 205 by means of shortcut, and the multi-workstation operation supporting module 202 will run as per the new basic configuration parameter table 205.

Although the computer system in the above-mentioned embodiments according to the present invention has only one primary workstation and one extended workstation, a system with multiple extended workstations are also acceptable, which is obviously within the protection scope of the present invention.

In any embodiment of Embodiments 1 to 5 of the present invention, the computer system further includes a USB graphic card which connects with the characteristic mark USB Hub. The configuration of the USB graphic card does not need to follow the equipment configuration method of this patent; the USB graphic card can be directly assigned to the characteristic mark USB Hub for subsequent operations.

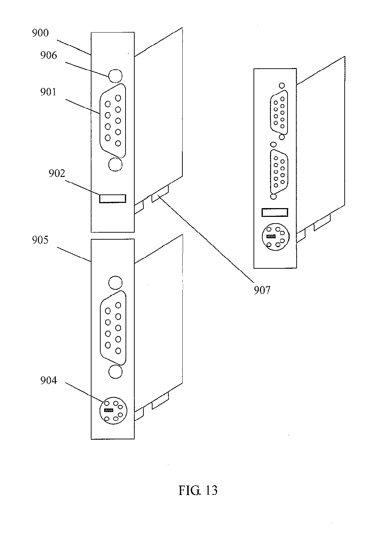

The present invention further provides a workstation card, as shown in FIG. 13, wherein the workstation card 900 is provided with an add-in piece 907 which can be inserted into a slot of the mainboard in the host, a video output interface 901 and a USB port 902; the workstation card 905 is provided with a PS/2 port 904. In the figure, 906 refers to a thread hole of the video output interface. The workstation card may be formed by integrating other human-machine interaction device interfaces onto a graphic card.

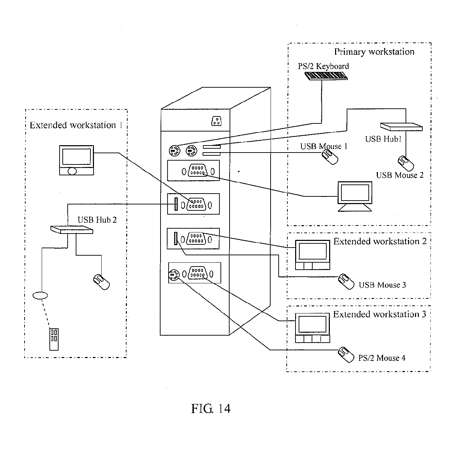

Embodiment 6, a "single-host multi-workstation" computer system adopting the workstation card is as shown in FIG. 14. The human-machine interaction devices connected to one workstation card are automatically configured to one extended workstation, and the human-machine interaction devices connected to an ordinary board are automatically configured to the primary workstation.

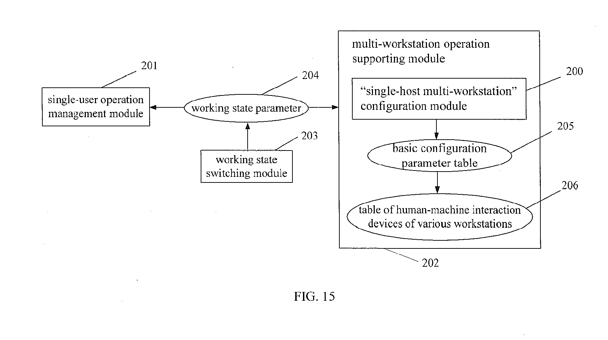

As to Embodiment 2 and Embodiment 6, the workstation configuration process can be fully completed by the "single-host multi-workstation" software, so the configuration module 200 of the "single-host multi-workstation" software is not necessary to run in an individual way during implementation. As shown in FIG. 15, after the installation of the "single-host multi-workstation" software, the multi-workstation operation supporting module 202 can be directly enabled. During the operation of the module 202, the single-host multi-workstation configuration module 200 is enabled to realize the configuration of the workstations. As to Embodiment 6, this configuration has the following steps:
I) Identify all the workstation cards in the system, and correlate each of the workstation cards with an extended workstation.
II) Allocate the human-machine interaction devices connected to a respective workstation card and the graphic cards integrated in the corresponding workstation to the extended workstation corresponding to the respective workstation card; allocate other human-machine interaction devices and graphic cards to the primary workstation.

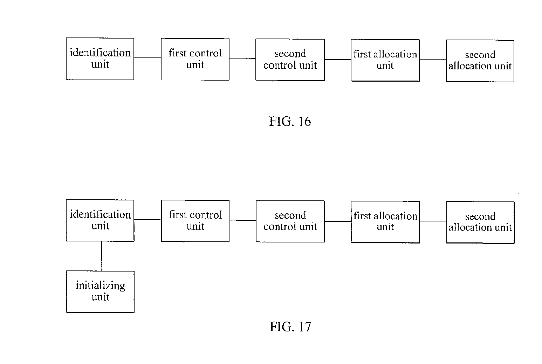

The present invention further discloses Embodiment 7, as shown in FIG. 16, which provides an equipment configuration module for "single-host multi-workstation" computer system, wherein the equipment configuration module includes:
an identification unit, used to identify all the characteristic mark USB Hubs connected to the host;
a first control unit, used to correlate each of the characteristic mark USB Hubs with an extended workstation;
a second control unit, used to respectively correlate a primary workstation and each extended workstation with a graphic card;
a first allocation unit, used to allocate the human-machine interaction devices connected to a respective characteristic mark USB Hub to the extended workstation corresponding to the respective characteristic mark USB Hub;
a second allocation unit, used to allocate other human-machine interaction devices to the primary workstation.

The present invention further discloses Embodiment 8, as shown in FIG. 17, which also discloses an equipment configuration module for "single-host multi-workstation" computer system, wherein the system comprises a host; the host has a plurality of graphic cards installed in it, and connects to at least one characteristic mark USB Hub; the equipment configuration module includes:
an initializing unit, used to make all the graphic cards connected to the host display the same user interface;
an identification unit, used to identify all the characteristic mark USB Hubs connected to the host;
a first control unit, used to correlate each of the characteristic mark USB Hubs with an extended workstation;
a second control unit, used to respectively correlate a primary workstation and each extended workstation with a graphic card;
a first allocation unit, used to allocate the human-machine interaction devices connected to a respective characteristic mark USB Hub to the extended workstations corresponding to the respective characteristic mark USB Hub;
a second allocation unit, used to allocate other human-machine interaction devices to the primary workstation.

Wherein, the human-machine interaction device is selected from one of keyboard, mouse, remote control receiver, joy stick, sound card, speaker, microphone and camera or the combination.

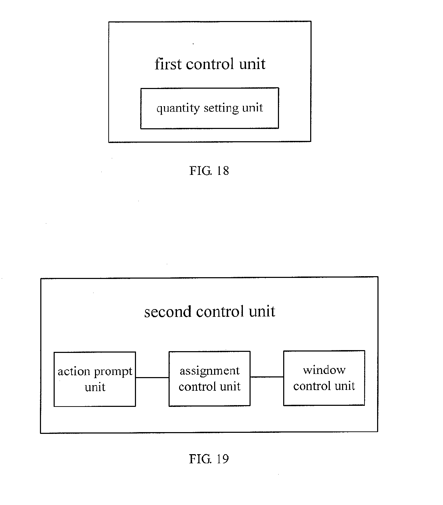

As shown in FIG. 18, the first control unit includes: a quantity setting unit, used to set the number of extended workstations in the system to be the same as the number of the characteristic mark USB Hubs identified so as to correlate the extended workstations and the characteristic mark USB Hubs one to one.

As shown in FIG. 19, the second control unit includes:
an action prompt unit, used to pop up a prompt window only on the display terminal device connected with a certain graphic card, instructing the user to input an action via a certain input device of the workstation paired with the display terminal;
an assignment control unit, used to wait for a while and during this period, if an action from an input device is identified, assign the graphic card connected with the display terminal device to the workstation corresponding to the input device from which the input action comes;
a window control unit, used to repeat the operating steps of the action prompt unit and the assignment control unit, until the prompt window as shown during the operating step of the action prompt unit has been popped up for all the graphic cards.

Furthermore, when the system has a plurality of characteristic mark USB Hubs, the characteristic marks of the plurality of characteristic mark USB Hubs are different from one another; the characteristic mark USB Hub has a characteristic mark identifiable by the system and the mark could be retrieved by the following units:
a first acquisition unit, used to read an original default characteristic mark stored in the USB Hub chip for identification; or
a second acquisition unit, used to read the characteristic mark stored in an external ROM of a main chip of the USB Hub for identification; or
a third acquisition unit, used to read the characteristic mark stored in a USB device connected with the USB Hub for identification; or
a fourth acquisition unit, used to read an index number of the host USB port to which the U SB Hub is connected for identification.

Furthermore, the "original default characteristic mark" read by the first acquisition unit is one of the USB Hub's VID, PID or product serial number. The "characteristic mark stored in a USB device connected with the USB Hub" is one of the USB device's VID, PID or product serial number.

The present invention further discloses Embodiment 9 which also provides an equipment configuration module for "single-host multi-workstation" computer system, wherein the system comprises a host; the host has a plurality of graphic cards installed in it, and connects to at least one characteristic mark USB Hub; the equipment configuration module includes:
an initializing unit, used to make all the graphic cards connected to the host display the same user interface;
an identification unit, used to identify all the characteristic mark USB Hubs connected to the host;
a first control unit, used to correlate each of the characteristic mark USB Hubs with an extended workstation;
a second control unit, used to respectively correlate a primary workstation and each extended workstation with a graphic card;
a first allocation unit, used to allocate the human-machine interaction devices connected to a respective characteristic mark USB Hub to the extended workstation corresponding to the respective characteristic mark USB Hub;
a second allocation unit, used to allocate other human-machine interaction devices to the primary workstation.

Wherein, the human-machine interaction device is selected from one of keyboard, mouse, remote control receiver, joy stick, sound card, speaker, microphone and camera or the combination.

Wherein, the first control unit includes: a quantity setting unit, used to set the number of extended workstations in the system to be the same as the number of the characteristic mark USB Hubs identified, so as to correlate the extended workstations with the characteristic mark USB Hubs one to one.

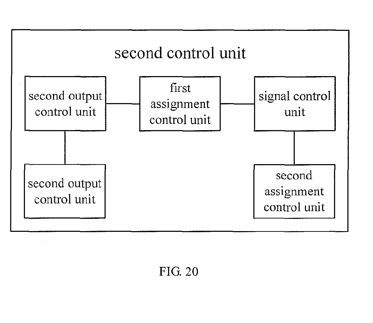

As shown in FIG. 20, the second control unit includes:
a first output control unit, used to lead video output of the graphic cards of the host to the characteristic mark USB Hubs, and dispose a signal detection apparatus on the periphery of the characteristic mark USB Hub; this apparatus is used to identify whether the graphic cards output a specific signal;
a second output control unit, used to make only one graphic card output the specific video signal as described in the operating step of the first output control unit;
a first assignment control unit, used to wait for a while and during this period, if a characteristic mark USB Hub display box identifies the video input signal, the graphic card is assigned to the extended workstation corresponding to the characteristic mark USB Hub display box;
a signal control unit, used to repeat the operating steps of the second output control unit and the assignment control unit, until all the graphic cards have output the specific video signal as described in step 5a);
a second assignment control unit, used to assign the graphic cards that have not yet been assigned to the primary workstation.

Furthermore, when the system has a plurality of characteristic mark USB Hubs, the characteristic marks of the plurality of characteristic mark USB Hubs are different from one another, and the characteristic mark USB Hub has a characteristic mark identifiable by the system and the mark could be retrieved by the following units:
a first acquisition unit, used to read an original default characteristic mark stored in the USB Hub chip for identification; or
a second acquisition unit, used to read the characteristic mark stored in an external ROM of a main chip of the USB Hub for identification; or
a third acquisition unit, used to read the characteristic mark stored in a USB device connected with the USB Hub for identification; or
a fourth acquisition unit, used to read an index number of the host USB port to which the U SB Hub is connected for identification.

Furthermore, the "original default characteristic mark" read by the first acquisition unit is one of the USB Hub's VID, PID or product serial number. The "characteristic mark stored in a USB device connected with the USB Hub" is one of the USB device's VID, PID or product serial number.

In any of Embodiments 7 to 9 of the present invention, the computer system as used further includes a USB graphic card which is connected to the characteristic mark USB Hub. The configuration of the USB graphic card does not need to follow the equipment configuration method of this patent; the USB graphic card can be directly allocated to the characteristic mark USB Hub for subsequent operations.

Although the present invention is explained in detail by several embodiments, it is still obvious for those skilled in this art that various substitutions, revisions and changes may be made according to the abovementioned description. Therefore, all these substitutions, revisions and changes shall be within the spirit and scope claimed by the claims herein.

## Claims

1. An equipment configuration method of "single-host multi-workstation" computer system, wherein the system comprises a host, in which installs a plurality of graphic cards, the host connecting to at least one characteristic mark USB Hub, the method performing configuration of single-host multi-workstation by means of the system, **characterized in that**, the method comprises the following steps:
(1) identifying all the characteristic mark USB Hubs connected to the host;
correlating each of the characteristic mark USB Hubs with an extended workstation;
respectively correlating a primary workstation and each extended workstation with a graphic card;
(2) allocating human-machine interaction devices connected to a respective characteristic mark USB Hub to the extended workstation corresponding to the respective characteristic mark USB Hub; allocating other human-machine interaction devices to the primary workstation.

2. The equipment configuration method of "single-host multi-workstation" computer system as claimed in claim 1, **characterized in that**, the human-machine interaction device is selected from one of keyboard, mouse, remote control receiver, joy stick, sound card, speaker, microphone and camera or the combination.

3. The equipment configuration method of "single-host multi-workstation" computer system as claimed in any one of claim 1 or 2, **characterized in that**, the step of "correlating each of the characteristic mark USB Hubs with an extended workstation" is detailed as: setting a number of extended workstations in the system to be the same as a number of the characteristic mark USB Hubs identified, and correlating the extended workstations and the characteristic mark USB Hubs one to one.

4. The equipment configuration method of "single-host multi-workstation" computer system as claimed in any one of claim 1 or 2, **characterized in that**, the step of "respectively correlating a primary workstation and each extended workstation with a graphic card" comprises the following sub-steps:
4a) popping up a prompt window only on a display terminal device connected with a certain graphic card, instructing a user to input an action via a certain input device of the workstation paired with the display terminal;
4b) waiting for a while; during this period, if an action from an input device is identified, the graphic card connected with the display terminal device is assigned to the workstation corresponding to the input device from which the input action comes;
4c) repeating steps 4a) and 4b) until the prompt window in step 4a) has been popped up for all the graphic cards.

5. The equipment configuration method of "single-host multi-workstation" computer system as claimed in any one of claim 1 or 2, **characterized in that**, the step of "respectively correlating a primary workstation and each extended workstation with a graphic card" comprises the following sub-steps:
5a) leading video output of the graphic cards of the host to the characteristic mark USB Hubs, and disposing a signal detection apparatus on periphery of the characteristic mark USB Hub, wherein the apparatus is used to identify whether a specific signal is output from a graphic card;
5b) making only one graphic card output the specific video signal as described in step 5a);
5c) waiting for a while; during this period, if a characteristic mark USB Hub display box identifies the video input signal, the graphic card is assigned to the extended workstation corresponding to the characteristic mark USB Hub display box;
5d) repeating steps 5b) and 5c) until all the graphic cards have output the specific video signal as described in step 5a);
5e) assigning the graphic cards that have not yet been assigned to the primary workstation.

6. The equipment configuration method of "single-host multi-workstation" computer system as claimed in any one of claim 1 or 2, **characterized in that**, before step (1) of the configuration method, step (0) as below is further included: making all the graphic cards connected to the host display a same user interface.

7. The equipment configuration method of "single-host multi-workstation" computer system as claimed in any one of claim 1 or 2, **characterized in that**, when the system has a plurality of characteristic mark USB Hubs, characteristic marks of the plurality of characteristic mark USB Hubs are different from one another.

8. The equipment configuration method of "single-host multi-workstation" computer system as claimed in claim 7, **characterized in that**, the characteristic mark USB Hub has a characteristic mark identifiable by the system and could be retrieved by the following method:
reading an original default characteristic mark stored in a chip of the USB Hub for identification; or
reading the characteristic mark stored in an external ROM of a main chip of the USB Hub for identification; or
reading the characteristic mark stored in a USB device connected with the USB Hub for identification; or
reading an index number of a host USB port to which the USB Hub is connected.

9. The equipment configuration method of "single-host multi-workstation" computer system as claimed in claim 8, **characterized in that**, the "original default characteristic mark" is one of the USB Hub's VID, PID or product serial number; the "characteristic mark stored in a USB device connected with the USB Hub" is one of the USB device's VID, PID or product serial number.

10. A USB Hub used in the equipment configuration method as claimed in any one of claims 1-9, comprising a USB Hub main chip and a peripheral circuit, **characterized in that**, having a characteristic mark identifiable by a computer stored in the USB Hub main chip, or in an external ROM of the USB Hub main chip, or in a USB device connected with the USB Hub.

11. The USB Hub as claimed in claim 10, **characterized in that**, the USB Hub is integrated with a human-machine interaction device selected from one of USB infrared receiver, USB wireless receiver and USB sound card or the combination.

12. The USB Hub as claimed in claim 11, **characterized in that**, the USB Hub is integrated with a key capable of activating an input event; when the key is pressed, the USB Hub enables the host to generate an input event.

13. The USB Hub as claimed in any one of claims 10-12, **characterized in that**, the USB Hub is integrated with a video input interface and is also integrated with an apparatus for identifying a specific video signal.

14. A "single-host multi-workstation" computer system, wherein the system comprises a host, in which installs a plurality of graphic cards, **characterized in that**, the host is connected to the USB Hub as claimed in any one of claims 10-13.

15. The computer system as claimed in claim 14, **characterized in that**, the USB Hub connects with the human-machine interaction devices as claimed in claim 2 respectively.

16. A workstation card, having at least one graphic card and at least one USB port or PS/2 port integrated therein, the graphic card and the USB port being corresponded to each other in hardware design, in a "single-host multi-workstation" computer system, the graphic cards on a same workstation card and human-machine interaction devices connected to the workstation card being correlated with a same workstation.

17. A computer system used in the equipment configuration method as claimed in any one of claims 1 to 9, **characterized in that**, the computer system further comprises a USB graphic card, the USB graphic card being connected to the characteristic mark USB Hub.

18. An equipment configuration method of "single-host multi-workstation" computer system, **characterized in that**, the equipment configuration method comprises the following steps:
(1) identifying all characteristic mark USB Hubs connected to a host;
correlating each of the characteristic mark USB Hubs with an extended workstation;
respectively correlating a primary workstation and each extended workstation with a graphic card;
(2) allocating human-machine interaction devices connected to a respective characteristic mark USB Hub to the extended workstation corresponding to the respective characteristic mark USB Hub; allocating other human-machine interaction devices to the primary workstation.

19. The equipment configuration method of "single-host multi-workstation" computer system as claimed in claim 18, **characterized in that**, the human-machine interaction device is selected from one of keyboard, mouse, remote control receiver, joy stick, sound card, speaker, microphone and camera or the combination.

20. The equipment configuration method of "single-host multi-workstation" computer system as claimed in any one of claim 18 or 19, **characterized in that**, the step of "correlating each of the characteristic mark USB Hubs with an extended workstation" is detailed as: setting a number of extended workstations in the system to be the same as a number of the characteristic mark USB Hubs identified, and correlating the extended workstations and the characteristic mark USB Hubs one to one.

21. The equipment configuration method of "single-host multi-workstation" computer system as claimed in any one of claim 18 or 19, **characterized in that**, the step of "respectively correlating a primary workstation and each extended workstation with a graphic card" comprises the following sub-steps:
4a) popping up a prompt window only on a display terminal device connected with a certain graphic card, instructing a user to input an action via a certain input device of the workstation paired with the display terminal;
4b) waiting for a while; during this period, if an action from an input device is identified, the graphic card connected with the display terminal device is assigned to the workstation corresponding to the input device from which the input action comes;
4c) repeating steps 4a) and 4b) until the prompt window in step 4a) has been popped up for all the graphic cards.

22. The equipment configuration method of "single-host multi-workstation" computer system as claimed in any one of claim 18 or 19, **characterized in that**, the step of "respectively correlating a primary workstation and each extended workstation with a graphic card" comprises the following sub-steps:
5f) leading video output of the graphic cards of the host to the characteristic mark USB Hubs, and disposing a signal detection apparatus on periphery of the characteristic mark USB Hub, wherein the apparatus is used to identify whether a specific signal is output from a graphic card;
5g) making only one graphic card output the specific video signal as described in step 5a);
5h) waiting for a while; during this period, if a characteristic mark USB Hub display box identifies the video input signal, the graphic card is assigned to the extended workstation corresponding to the characteristic mark USB Hub display box;
5i) repeating steps 5b) and 5c) until all the graphic cards have output the specific video signal as described in step 5a);
5j) assigning the graphic cards that have not yet been assigned to the primary workstation.

23. The equipment configuration method of "single-host multi-workstation" computer system as claimed in any one of claim 18 or 19, **characterized in that**, before step (I) of the configuration method, step (0) as below is further included: making all the graphic cards connected to the host display a same user interface.

24. The equipment configuration method of "single-host multi-workstation" computer system as claimed in any one of claim 18 or 19, **characterized in that**, when the system has a plurality of characteristic mark USB Hubs, characteristic marks of the plurality of characteristic mark USB Hubs are different from one another.

25. The equipment configuration method of "single-host multi-workstation" computer system as claimed in claim 24, **characterized in that**, the characteristic mark USB Hub has a characteristic mark identifiable by the system and could be retrieved by the following method:
reading an original default characteristic mark stored in a chip of the USB Hub for identification; or
reading the characteristic mark stored in an external ROM of a main chip of the USB Hub for identification; or
reading the characteristic mark stored in a USB device connected with the USB Hub for identification; or
reading an index number of a host USB port to which the USB Hub is connected.

26. The equipment configuration method of "single-host multi-workstation" computer system as claimed in claim 25, **characterized in that**, the "original default characteristic mark" is one of the USB Hub's VID, PID or product serial number; the "characteristic mark stored in a USB device connected with the USB Hub" is one of the USB device's VID, PID or product serial number.

27. A USB Hub used in the equipment configuration method as claimed in any one of claims 18 to 26, comprising a USB Hub main chip and a peripheral circuit, **characterized in that**, having a characteristic mark identifiable by a computer stored in the USB Hub main chip, or in an external ROM of the USB Hub main chip, or in a USB device connected with the USB Hub.

28. The USB Hub as claimed in claim 27, **characterized in that**, the USB Hub is integrated with a human-machine interaction device selected from one of USB infrared receiver, USB wireless receiver and USB sound card or the combination.

29. The USB Hub as claimed in claim 28, **characterized in that**, the USB Hub is integrated with a key capable of activating an input event; when the key is pressed, the USB Hub enables the host to generate an input event.

30. The USB Hub as claimed in any one of claims 27-29, **characterized in that**, the USB Hub is integrated with a video input interface and is also integrated with an apparatus for identifying a specific video signal.

31. A computer system used in the equipment configuration method as claimed in any one of claims 18-26, **characterized in that**, the computer system further comprises a USB graphic card, the USB graphic card being connected to the characteristic mark USB Hub.

32. An equipment configuration module for "single-host multi-workstation" computer system, wherein the system comprises a host, in which installs a plurality of graphic cards, the host connecting to at least one characteristic mark USB Hub, **characterized in that**, the equipment configuration module comprises:
an identification unit, used to identify all the characteristic mark USB Hubs connected to the host;
a first control unit, used to correlate each of the characteristic mark USB Hubs with an extended workstation;
a second control unit, used to respectively correlate a primary workstation and each extended workstation with a graphic card;
a first allocation unit, used to allocate human-machine interaction devices connected to a respective characteristic mark USB Hub to the extended workstation corresponding to the respective characteristic mark USB Hub;
a second allocation unit, used to allocate other human-machine interaction devices to the primary workstation.

33. The equipment configuration module for "single-host multi-workstation" computer system as claimed in claim 32, **characterized in that**, the human-machine interaction device is selected from one of keyboard, mouse, remote control receiver, joy stick, sound card, speaker, microphone and camera or the combination.

34. The equipment configuration module for "single-host multi-workstation" computer system as claimed in any one of claim 32 or 33, **characterized in that**, the first control unit comprises: a quantity setting unit, used to set a number of extended workstations in the system to be the same as a number of the characteristic mark USB Hubs identified so as to correlate the extended workstations and the characteristic mark USB Hubs one to one.

35. The equipment configuration module for "single-host multi-workstation" computer system as claimed in claim 32 or 33, **characterized in that**, the second control unit comprises:
an action prompt unit, used to pop up a prompt window only on a display terminal device connected with a certain graphic card, instructing a user to input an action via a certain input device of the workstation paired with the display terminal;
an assignment control unit, used to wait for a while and during this period, if an action from an input device is identified, the graphic card connected with the display terminal device is assigned to the workstation corresponding to the input device from which the input action comes;
a window control unit, used to repeat the operating steps of the action prompt unit and the assignment control unit, until the prompt window in the operating step of the action prompt unit has been popped up for all the graphic cards.

36. The equipment configuration module for "single-host multi-workstation" computer system as claimed in claim 32 or 33, **characterized in that**, the second control unit comprises:
a first output control unit, used to lead video output of the graphic cards of the host to the characteristic mark USB Hubs, and dispose a signal detection apparatus on periphery of the characteristic mark USB Hub, wherein the apparatus is used to identify whether a specific signal is output from a graphic card;
a second output control unit, used to make only one graphic card output.the specific video signal as described in the operating step of the first output control unit;
a first assignment control unit, used to wait for a while, during this period, if a characteristic mark USB Hub display box identifies the video input signal, the graphic card is assigned to the extended workstation corresponding to the characteristic mark USB Hub display box;
a signal control unit, used to repeat the operating steps of the second output control unit and the assignment control unit, until all the graphic cards have output the specific video signal as described in step 5a);
a second assignment control unit, used to assign the graphic cards that have not yet been assigned to the primary workstation.

37. The equipment configuration module for "single-host multi-workstation" computer system as claimed in claim 32 or 33, **characterized in that**, the equipment configuration module further comprises: an initializing unit, used to make all the graphic cards connected to the host display a same user interface.

38. The equipment configuration module for "single-host multi-workstation" computer system as claimed in any one of claim 32 or 33, **characterized in that**, when the system has a plurality of characteristic mark USB Hubs, characteristic marks of the plurality of characteristic mark USB Hubs are different from one another.

39. The equipment configuration module for "single-host multi-workstation" computer system as claimed in claim 38, **characterized in that**, the characteristic mark USB Hub has a characteristic mark identifiable by the system and could be retrieved by the following units:
a first acquisition unit, used to read an original default characteristic mark stored in a chip of the USB Hub for identification; or
a second acquisition unit, used to read the characteristic mark stored in an external ROM of a main chip of the USB Hub for identification; or
a third acquisition unit, used to read the characteristic mark stored in a USB device connected with the USB Hub for identification; or
a fourth acquisition unit, used to read an index number of a host USB port to which the USB Hub is connected.

40. The equipment configuration module for "single-host multi-workstation" computer system as claimed in claim 39, **characterized in that**, the "original default characteristic mark" read by the first acquisition unit is one of the USB Hub's VID, PID or product serial number; the "characteristic mark stored in a USB device connected with the USB Hub" is one of the USB device's VID, PID or product serial number.

41. A computer system used by the equipment configuration module as claimed in any one of claims 32-40, **characterized in that**, the computer system further comprises a USB graphic card, the USB graphic card being connected to the characteristic mark USB Hub.

42. An equipment configuration module for "single-host multi-workstation" computer system, **characterized in that**, the equipment configuration module comprises:
an identification unit, used to identify all the characteristic mark USB Hubs connected to the host;
a first control unit, used to correlate each of the characteristic mark USB Hubs with an extended workstation;
a second control unit, used to respectively correlate a primary workstation and each extended workstation with a graphic card;
a first allocation unit, used to allocate human-machine interaction devices connected to a respective characteristic mark USB Hub to the extended workstation corresponding to the respective characteristic mark USB Hub;
a second allocation unit, used to allocate other human-machine interaction devices to the primary workstation.

43. The equipment configuration module for "single-host multi-workstation" computer system as claimed in claim 42, **characterized in that**, the first control unit comprises: a quantity setting unit, used to set a number of extended workstations in the system to be the same as a number of the characteristic mark USB Hubs identified so as to correlate the extended workstations and the characteristic mark USB Hubs one to one.

44. The equipment configuration module for "single-host multi-workstation" computer system as claimed in claim 42, **characterized in that**, the second control unit comprises:
an action prompt unit, used to pop up a prompt window only on a display terminal device connected with a certain graphic card, instructing a user to input an action via a certain input device of the workstation paired with the display terminal;
an assignment control unit, used to wait for a while and during this period, if an action from an input device is identified, the graphic card connected with the display terminal device is assigned to the workstation corresponding to the input device from which the input action comes;
a window control unit, used to repeat the operating steps of the action prompt unit and the assignment control unit, until the prompt window in the operating step of the action prompt unit has been popped up for all the graphic cards.

45. The equipment configuration module for "single-host multi-workstation" computer system as claimed in claim 42, **characterized in that**, the second control unit comprises:
a first output control unit, used to lead video output of the graphic cards of the host to the characteristic mark USB Hubs, and dispose a signal detection apparatus on periphery of the characteristic mark USB Hub, wherein the apparatus is used to identify whether a specific signal is output from a graphic card;
a second output control unit, used to make only one graphic card output the specific video signal as described in the operating step of the first output control unit;
a first assignment control unit, used to wait for a while, during this period, if a characteristic mark USB Hub display box identifies the video input signal, the graphic card is assigned to the extended workstation corresponding to the characteristic mark USB Hub display box;
a signal control unit, used to repeat the operating steps of the second output control unit and the assignment control unit, until all the graphic cards have output the specific video signal as described in step 5a);
a second assignment control unit, used to assign the graphic cards that have not yet been assigned to the primary workstation.

46. The equipment configuration module for "single-host multi-workstation" computer system as claimed in claim 42, **characterized in that**, the equipment configuration module further comprises: an initializing unit, used to make all the graphic cards connected to the host display a same user interface.

47. The equipment configuration module for "single-host multi-workstation" computer system as claimed in claim 42, **characterized in that**, when the system has a plurality of characteristic mark USB Hubs, characteristic marks of the plurality of characteristic mark USB Hubs are different from one another.

48. The equipment configuration module for "single-host multi-workstation" computer system as claimed in claim 47, **characterized in that**, the characteristic mark USB Hub has a characteristic mark identifiable by the system and could be retrieved by the following units:
a first acquisition unit, used to read an original default characteristic mark stored in a chip of the USB Hub for identification; or
a second acquisition unit, used to read the characteristic mark stored in an external ROM of a main chip of the USB Hub for identification; or
a third acquisition unit, used to read the characteristic mark stored in a USB device connected with the USB Hub for identification; or
a fourth acquisition unit, used to read an index number of a host USB port to which the USB Hub is connected.

49. The equipment configuration module for "single-host multi-workstation" computer system as claimed in claim 48, **characterized in that**, the "original default characteristic mark" read by the first acquisition unit is one of the USB Hub's VID, PID or product serial number; the "characteristic mark stored in a USB device connected with the USB Hub" is one of the USB device's VID, PID or product serial number.

50. A computer system used by the equipment configuration module as claimed in any one of claims 42-49, **characterized in that**, the computer system further comprises a USB graphic card, the USB graphic card being connected to the characteristic mark USB Hub.
